# EUROPEAN PATENT SPECIFICATION

(11) **EP 0 909 531 B1**
(45) Date of publication and mention of the grant of the patent: **12.06.2002**
(21) Application number: 98118310.6
(22) Date of filing: 25.09.1998
(51) Int. Cl.: A01N 47/02

(54) **Insecticidal/acaricidal composition**
Insektizide/akarizide Zusammensetzung
Composition insecticide/acaricide

(30) Priority: 26.09.1997 JP 26171897
(43) Date of publication of application: 21.04.1999
(73) Proprietor: Sumitomo Chemical Company, Limited, Chuo-ku Osaka 541-8550 (JP)
(72) Inventor: Kawada, Hitoshi, Funabashi-shi, Chiba (JP)
(74) Representative: VOSSIUS & PARTNER

(56) References cited:
- CENTRAL PATENTS INDEX, BASIC ABSTRACTS JOURNAL Section Ch, Week 8244 Derwent Publications Ltd., London, GB; Class C03, AN 82-94135E XP002093642 & JP 57 156407 A (SUMITOMO CHEM CO LTD) , 27 September 1982

## Description

The present invention relates to an insecticidal/acaricidal composition which is particularly suitable for controlling mites and/or ticks.

Mites and/or ticks have been a nuisance to many people and have often been considered noxious pests. In an attempt to control the population of these mites and/or ticks, insecticidal/acaricidal compositions have been developed. 2-methoxycarbonyl-4-chlorotrifluoromethanesulfonanilide, shown with its chemical structure below: 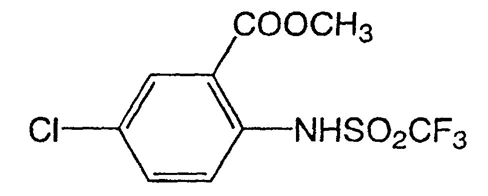 is known as an active ingredient of an insecticidal/acaricidal composition, based upon JP-A-57-156407 and JP-A-8-319202.

N-(2-ethylhexyl)bicycle[2.2.1]hept-5-ene-2,3-dicarboximide, widely known as MGK-264, noted as a compound in "The Pesticide Manual 10th ed." page 392 (published by British Crop Protection), is known for its utilization as a synergist (as itself, it shows no insecticidal effect, but strengthens, when added to allethrin, lethality thereof). Recently, with the appearence of high activity pyrethroid compounds replacing allethrin, a new substance together with which N-(2-ethylhexyl)bicyclo [2.2.1]hept-5-en-2,3- dicarboximide can be used as an additive instead of allethrin was looked for; (cf. "Nouyaku no seiyukikagaku to bunshisekkei (Bio-organic Chemistry and Molecular Design of Pesticides)" edited by Kazufusa Eto, published by Soft Science Co.(1985))

The insecticidal/acaricidal compositions developed to the point, however, cannot effectively control mite and/or ticks. It would be of advantage, to have an insecticidal/acaricidal composition that can effectively control noxious pests such as indoor mites.

An object of the present invention is to provide an insecticidal/acaricidal composition having high insect and/or acarina killing effectiveness.

The insecticidal/acaricidal composition of the present invention is a composition containing 2-methoxycarbonyl-4-chlorotrifluoromethanesulfonanilide and N-(2-ethylhexyl) bicyclo[2.2.1]hept-5-ene-2,3-dicarboximide as active ingredients; and within the insecticidal/acaricidal composition of the present invention, the 2-methoxycarbonyl-4-chlorotrifluoromethanesulfonanilide and N-(2-ethylhexyl)bicyclo[2.2.1]hept-5-ene-2,3-dicarboximide generally are present in a weight ratio in the ra of 1:1 to 1:50.

The insecticidal/acaricidal composition of the present invention generally may contain a carrier in addition to the active ingredients, and if necessary, auxiliary agents for formulating such as a dispersing agent, wetting agent, adhesive agent, anti-oxidant and ultraviolet stabilizer. The present composition may have any conventional form including but not limited to oil formulations, emulsifiable concentrates, suspensible concentrates, dusts, granules, aerosol formulations, combustion agents, heated vaporization agents and sheet formulations.

Usable carriers include liquid carriers such as hydrocarbons (for example, toluene, xylene, methylnaphthalene, phenylxylylethane , kerosene, hexane, cyclohexane), ethers (for example, diethyl ether, ethylene glycol dimethyl ether, tetrahydrofuran, dioxane), ketones (for example, acetone, methyl ethyl ketone, methyl isobutyl ketone, cyclohexanone, isophorone), alcohols (for example, methanol, ethanol, isopropyl alcohol, hexanol, ethylene glycol) and amides (for example, N,N-dimethylformamide, N,N-dimethylacetamide); and/or solid carriers such as talc, bentonite, clay, kaolin, diatomite, silica, vermiculite and perlite.

Furthermore, when the insecticidal/acaricidal composition of the present invention is formulated as an aerosol, gaseous carriers such as nitrogen, carbon dioxide, dimethyl ether, and LPGs may be contained as a propellant.

When the insecticidal/acaricidal composition of the present invention is an inflammable smoking formulation, a foaming agent may be contained in addition to the active ingredients. This foaming agent for example, may be illustrated by organic foaming agents such as azodicarbonamide, azobisisobutyronitrile, dinitropentamethylenetetramine, and/or p,p'-oxy-bis(benzenesulfonylhydrazide) which can create nitrogen by heat decompose. When using such an inflammable smoking formulation, for example, the method stated in JP-B-59-49201 is convenient. It includes a container divided by a wall having granules of the smoking agent in one and calcium oxide in the other compartment. Upon addition of water to the calcium oxide at the time of use, the heat of the chemical reaction is employed to fumigate the active agent to exterminate acarine and/or insects.

When the insecticidal/acaricidal composition of the present invention is a combustable type smoking formulation, it may contain in addition to the effective components, oxygen providing agents, such as potassium perchlorate, potassium nitrate and potassium chlorate; sugars and/or starches as combustable agents; further, when needed, guanidine nitrate, nitroguanidine, dicyandiamide, guanylurea phosphate and/or guanidine sulfamate as heat-emitting control agents and/or potassium chloride, sodium chloride, iron oxide (Fe₃O₄), , copper oxide, chromium oxides iron oxide (Fe₂O₃), iron chloride and active carbon as oxygen source-decomposition helping agents, perlite, diatomaceous earth, talc and/or clay, as inorganic carriers. To prepare the composition, the listed components are mixed, water is added and the mixture is kneaded, formed to granules, and dried.

When the insecticidal/acaricidal composition of the present invention is formulated as a mat formulation for vaporization under heating (in other words, a mosquito-mat formulation for electric heating), this insecticidal/acaricidal composition has the active ingredients preserved in a porous carrier, such as a cotton linter, non-woven fabric, ceramic board, and/or thick paper. This mat formulation for vaporization under heating is heated 100° to 300°C and utilized for example, when using an electric mosquito-mat heater from the market.

When the insecticidal/acaricidal composition of the present invention takes the form of a sheet, as a sheet material, for example, paper, synthetic resin films such as polyolefins, polyesters or polyvinyl chloride, synthetic fibers, natural fibers such as wool, silk or cotton, in the form of a woven or non-woven fabric may be used. With about 1 m² of this sheet material, standardly, 2-methoxycarbonyl-4-chlorotrifluoromethanesulfonanilide and N-(2-ethylhexyl)bicyclo[2.2.1]hept-5-ene-2,3-dicarboximide are generally used in a total amount of 0.01 to 2.00g. Furthermore, this sheet material has generally a thickness of about 0.01 to 10 mm.

when the insecticidal/acaricidal composition of the present invention takes the form of a sheet; the active ingredients, 2-methoxycarbonyl-4-chlorotrifluoromethanesulfonanilide and N-(2-ethylhexyl)bicyclo[2.2.1]hept-5-ene-2,3-dicarboximide may be soaked into the sheet material optionally together with mixing components. Such impregnation may generally be carried out in the form of a solution (for example, in a ketone solvent such as acetone, alcohol solvent such as methanol, ester solvent such as ethyl acetate, halogenated hydrocarbon solvent such as dichloromethane, aromatic hydrocarbon solvent such as benzene or aliphatic hydrocarbon solvent such as hexane, for components soluble in organic solvents). In a further embodiment the synthetic resin film or synthetic fiber which becomes the sheet ingredient may previously have 2-methoxycarbonyl-4-chlorotrifluoromethanesulfonanilide and N-(2-ethylhexyl)-bicyclo[2.2.1]hept-5-ene-2,3-dicarboximide with optional mixture components, possibly in the form of a solution, integrated, and is afterwards formed into a film and/or a fiber fabric.

While the insecticidal/acaricidal composition of the present invention is a composition that basically contains 2-methoxycarbonyl-4-chlorotrifluoromethanesulfonanilide and N-(2-ethylhexyl)bicyclo[2.2.1]hept-5-ene-2,3-dicarboximide as active ingredients, it may nevertheless contain also other insecticidal/acaricidal agents (for example, permethrin and empenthrin of the pyrethroid compounds), synergists, and/or bacteriocides/fungicides.

The insecticidal/acaricidal composition of the present invention is effective to exterminate especially, indoor mites, for example Dermanyssidae such as American house dust mite (*Dermatophagoides farinae*) and *Dermatophagoides pteronyssnus*, Acaridae such as Lardoglyphus konoi, copra mite (*Tyrophagus putrescentai*), brown legged grain mite (*Aleuroglyphus ovatus*), Glycyphagidae such as *Glycyphagus privatus, Glycyphagus domesticus* and *Glycyphagus destrutor*, Chortoglyphus spp., Cheyletidae such as *Chelacaropsis moorei, Chelacaropsis malaccensis, Cheyletus fortis*, Cheyletus eruditus, and Chelatomorpha lepidopterorum, Macronyssidae such as *Ornithonyssus bacoti, Ornithonyssus sylviarum, Dermanyssus gallinae* and Dermanyssus hirundinis, *Halpochthonius spp., Pyemotes spp.,* itch mite. Its effect is, however, not limited to these mites, but it is also effective to exterminate harmful insects like fleas such as cat flea *(Ctenocephalides fells)* and dog flea *(Ctenocephalides canis),* cockroaches such as German cockroach *(Blattella germanica)* and smokybrown cockroaches *(Periplaneta fuliginosa)*, Psocidae such as *Liposcelis bostrychophilus* and Liposcelis entomophilus, ants such as little red ant *(Monorium pharaonis)* and bed bugs such as *Cinemex lectularius*.

### EXAMPLES

Below, the present invention will be explained in detail by examples.

### Production example 1

Five parts by weight of 2-methoxycarbonyl-4-chlorotrifluoromethanesulfonanilide and 15 parts by weight of N-(2-ethylhexyl)bicyclo[2.2.1]hept-5-ene-2,3-dicarboximide, 0.5 part by weight of zinc oxide, and 2 parts by weight of α-starch were mixed with azodicarbonamide to make a batch of 100 parts by weight. Then water is added and the mixture is kneaded, then formed to granules by an extrusion machine and dried to obtain an insecticidal/acaricidal composition of the present invention (smoking formulation).

### Production example 2

1.5g of the mixture of 5 parts by weight of 2-methoxycarbonyl-4-chlorotrifluoromethanesulfonanilide and 15 parts by weight of N-(ethylhexyl)bicyclo[2.2.1]hept-5-ene-2,3-dicarboximide, 2.5g of azodicarbonamide, 1.5g of nitrocellulose, 0.4g of dibutyl phthalate, 0.54g of zinc oxide, 2.56g of perlite, and 1.0g of polyvinyl alcohol were combined. Water is added and the mixture is kneaded, formed to granules by an extrusion machine and dried to obtain an insecticidal/acaricidal composition of the present invention (smoking formulation).

### Production example 3

One gram of the mixture of 5 parts by weight of 2-methoxycarbonyl-4-chlorotrifluoromethanesulfonanailide and 15 parts by weight of N-(2-ethylhexyl)bicyclo[2.2.1]hept-5-ene-2,3-dicarboximide was spread on a porous ceramic body (height 4.2 cm, width 4.2 cm, thickness 1.2 cm, pore diameter of 0.3 cm, 102 pores, Kyosera Corporation brand) to obtain an insecticidal/acaricidal composition of the present invention (mat formulation for vaporization under heating).

### Production example 4

2-Methoxycarbonly- 4-chlorotrifluoromethanesulfonanilide and N-(2-ethylhexyl)bicyclo[2.2.1]hept-5-ene-2,3-dicarboximide were diluted with acetone and dropped onto 1m craft paper in amounts of 0.05g and 0.8g, respectively of the active agents. Then the paper was dried to obtain an insecticidal/acaricidal composition of the present invention (sheet formulation).

Next, test examples for the insecticidal/acaricidal composition of the present invention are explained.

### Test example 1

The insecticidal/acaricidal composition obtained in production example 4 (12 cm x 12 cm) was pasted onto the central region of a venire board (15cm x 15cm).
A carpet cut 3 cm x 3 cm bearing 0.1g powdered animal food and about 200 American house dust mites (*Dermatophagoides pteronyssinus*) was placed on top of the sheet carrying the acaricidal/insecticidal composition stated above. This construction was put in a plastic case with an estimated volume of 2.6L, a cup holding an aqueous solution saturated with ammonium nitrate was positioned on the bottom of the plastic case for humidity control, and then the case was closed. Retrieving the carpet six weeks later, an adhesive sheet was stuck onto the carpet surface. Then the carpet was placed on a hot plate heated up to 60°C and the mites that tried to escape to the upper region with the adhesive sheet were collected. The adhesive sheet was examined under a microscope, and the number of surviving mites (N) determined by counting. The comparative test was carried out by the same procedure as mentioned above except using no insecticidal/acaricidal composition and the number of surviving mites (M) determined by counting. A mite control index was calculated by menas of the equation below.$\text{mite control index = [(M-N) / M] x 100}$

An extermination sheet containing either 2-methoxycarbonyl-4-chlorotrifluoromethanesulfonanalide or N-(2-ethylhexyl)bicyclo[2.2.1]hept-5-ene-2,3-dicarboximide independently and a sheet without active ingredient were tested and evaluated according to the same equation.

As a result, the experiment using the sheet obtained in production example 4 gave an index of 64.5. However, compared to production example 4, an experiment using a 1m² sheet containing 0.05g of only 2-methoxycarbonyl-4-chlorotrifluoromethanesulfonanilide gave an index of 20.3; an experiment using a sheet containing 0.8g of only N-(2-ethylhexyl)bicyclo[2.2.1]hept-5-ene-2,3-dicarboximide gave an index of 0. This shows that the addition of N-(2-ethylhexyl)bicyclo[2.2.1]hept-5-en-2,3-dicarboxyimide greatly increases the mite controlling effectiveness of 2-methoxycarbonyl-4-chlorotrifluoromethanesulfonanilide.

## Claims

1. An insecticidal/acaricidal composition which comprises 2-methoxycarbonyl-4-chlorotrifluoromethanesulfonanilide and N-(2-ethylhexyl)bicyclo[2.2.1]hept-5-ene-2,3-dicarboximide as an active ingredients and optionally an inert carrier.

2. The insecticidal/acaricidal composition according to claim 1, wherein the weight ratio between 2-methoxycarbonyl-4-chlorotrifuoromethanesulfonanilide and N-(2-ethylhexyl)bicyclo[2.2.1]hept-5-ene-2,3-dicarboximide is within the range of 1:1 to 1:50.

3. A method for controlling insects/acarina which comprises applying an effective amount of 2-methoxycarbonyl-4-chlorotrifluoromethanesulfonanilide and N-(2-ethylhexyl)bicyclo[2.2.1)hept-5-ene-2,3-dicarboximide to insects/acarina or the locus they inhabit.

4. A method for controlling indoor mites which comprises applying an effective amount of 2-methoxycarbonyl-4-chlorotrifluoromethanesulfonanilide and N-(2-ethylhexyl)bicyclo[2.2.1]hept-5-ene-2,3-dicarboximide to the mites or the locus they inhabit.

5. The method according to claims 3 or 4, wherein the weight ratio between 2-methoxycarbonyl-4-chlorotrifuoromethanesulfonanilide and N-(2-ethylhexyl)bicyclo[2.2.1]hept-5-ene-2,3-dicarboximide is within the range of 1:1 to 1:50.

## Patentansprüche

1. Insektizides/akarizides Mittel, umfassend 2-Methoxycarbonyl-4-chlortrifluormethansulfonanilid und N-(2-Ethylhexyl)bicyclo[2.2.1]hept-5-en-2,3-dicarboximid als Wirkstoff und gegebenenfalls einen inerten Träger.

2. Insektizides/akarizides Mittel nach Anspruch 1, in dem das Gewichtsverhältnis zwischen 2-Methoxycarbonyl-4-chlortrifluormethansulfonanilid und N-(2-Ethylhexyl)bicyclo[2.2.1]hept-5-en-2,3-dicarboximid im Bereich von 1:1 bis 1:50 liegt.

3. Verfahren zum Bekämpfen von Insekten/Milben, umfassend das Aufbringen einer wirksamen Menge von 2-Methoxycarbonyl-4-chlortrifluormethansulfonanilid und N-(2-Ethylhexyl)bicyclo[2.2.1]hept-5-en-2,3-dicarboximid auf Insekten/Milben oder den Ort, an dem sie sich aufhalten.

4. Verfahren zum Bekämpfen von Milben im Haus, umfassend das Aufbringen einer wirksamen Menge von 2-Methoxycarbonyl-4-chlortrifluormethansulfonanilid und N-(2-Ethylhexyl)bicyclo[2.2.1]hept-5-en-2,3-dicarboximid auf die Milben oder den Ort, an dem sie sich aufhalten.

5. Verfahren nach Anspruch 3 oder 4, wobei das Gewichtsverhältnis zwischen 2-Methoxycarbonyl-4-chlortrifluormethansulfonanilid und N-(2-Ethylhexyl)bicyclo[2.2.1]hept-5-en-2,3-dicarboximid im Bereich von 1:1 bis 1:50 liegt.

## Revendications

1. Composition insecticide / acaricide comprenant du 2-méthoxycarbonyl-4-chlorotrifluorométhane sulfonanilide et du N-(2-éthylhexyl)bicyclo[2.2.1]hept-5-ène-2,3-dicarboximide comme ingrédient actif, et le cas échéant, un vecteur inerte.

2. Composition insecticide / acaricide selon la revendication 1, dans laquelle le rapport pondéral du 2-méthoxycarbonyl-4-chlorotrifluorométhane sulfonanilide sur le N-(2-éthylhexyl)bicyclo[2.2.1]hept-5-ène-2,3-dicarboximide est dans la plage de 1 : 1 à 1 : 50.

3. Procédé pour combattre les insectes / acariens qui comprend d'appliquer une quantité efficace de 2-méthoxycarbonyl-4-chlorotrifluorométhane sulfonanilide et de N-(2-éthylhexyl)bicyclo[2.2.1]hept-5-ène-2,3-dicarboximide sur ces insectes / acariens ou aux emplacements où ils se trouvent.

4. Procédé pour combattre les acariens d'habitation comprenant d'appliquer une quantité efficace de 2-méthoxycarbonyl-4-chloro-trifluorométhane sulfonanilide et de N-(2-éthylhexyl)bicyclo[2.2.1]hept-5-ène-2,3- dicarboximide sur ces acariens ou aux emplacements où ils se trouvent.

5. Procédé selon la revendication 3 ou la revendication 4, dans lequel le rapport pondéral du 2-méthoxycarbonyl-4-chlorotrifluorométhane sulfonanilide sur le N-(2-éthylhexyl)bicyclo[2.2.1]hept-5-ène-2,3-dicarboximide est dans la plage de 1 : 1 à 1 : 50.
